# EUROPÄISCHE PATENTSCHRIFT

(11) **EP 2 898 245 B1**
(45) Veröffentlichungstag und Bekanntmachung des Hinweises auf die Patenterteilung: **15.03.2017**
(21) Anmeldenummer: 13765315.0
(22) Anmeldetag: 10.09.2013
(51) Int. Cl.: F16K 31/22, F16K 31/06

(54) **MAGNETVENTIL MIT MAGNETISIERBAREM SCHWIMMER**
SOLENOID VALVE WITH MAGNETIZABLE FLOAT
ÉLECTROVANNE MUNIE D'UN FLOTTEUR MAGNÉTISABLE

(30) Priorität: 20.09.2012 DE 102012216905
(43) Veröffentlichungstag der Anmeldung: 29.07.2015
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2013/068750
(87) Internationale Veröffentlichungsnummer: WO 2014/044579

(56) Entgegenhaltungen:
- WO-A1-2013/041432
- DE-A1- 19 918 337
- DE-A1-102005 043 027
- US-A1- 2004 112 412

## Beschreibung

Die Erfindung betrifft ein Magnetventil, aufweisend eine Steuerkammer mit einem darin angeordneten Schwimmer, einem Wassereinlass, einem ersten Wasserauslass und einem zweiten Wasserauslass, sowie einen an der Steuerkammer angeordneten Elektromagneten, wobei der Schwimmer in einem entleerten Zustand der Steuerkammer den ersten Wasserauslass und den zweiten Wasserauslass freigibt, der Schwimmer in einem gefüllten Zustand der Steuerkammer bei deaktiviertem Elektromagneten den ersten Wasserauslass verschließt und der Schwimmer in einem gefüllten Zustand der Steuerkammer bei aktiviertem Elektromagneten den zweiten Wasserauslass verschließt. Die Erfindung betrifft ferner ein (wasserführendes) Haushaltsgerät mit mindestens einem solchen Magnetventil. Die Erfindung betrifft ferner ein Verfahren zum Betreiben eines solchen Magnetventils.

Soll bereits benutztes Wasser ("Gebrauchtwasser") in einem Haushaltsgerät erneut zum Einsatz kommen (Umpumplösungen verwenden das Wasser sofort wieder, bei Tanklösungen wird das Wasser in einem Tank aufbewahrt und zu einem späteren Zeitpunkt wieder verwendet), kann es erforderlich sein eine Möglichkeit zum Umschalten der Wasserwege im Ablaufbereich zu geben. Es muss dann eine Möglichkeit bereitgestellt werden, aus einem Gebrauchtwasserkanal stammendes Gebrauchtwasser wahlweise in einen Rückführkanal oder zu einem Ablauf zu führen. Der Rückführkanal kann das Wasser direkt wieder in einen Wasserkreislauf des Haushaltsgeräts oder alternativ in den Tank rückführen.

Typischerweise kommt hierzu mindestens eine Pumpe zum Einsatz. Eine Anordnung mit einem Schaltventil kann dann für einen drucklosen Schaltvorgang ausgelegt werden. Im Gegensatz zu gegen Druck arbeitenden Ventilen ist das drucklose Schalten deutlich einfacher aufgebaut.

Magnetisch schaltende Ventile sind in verschiedenen Varianten bekannt, unter anderem auch mit einem Elektromagneten als Umschaltbetätiger. Diese Elektromagnete müssen bisher zum Umschalten des Magnetventils ein vergleichsweise starkes Magnetfeld aufbauen und benötigen dazu einen vergleichsweise hohen Strom und ausreichend lange und/oder dicke Wicklungen.

Aus der DE 10 2005 043027 A1 wird ein gattungsgemässes Magnetventil bekannt.

Es ist die Aufgabe der vorliegenden Erfindung, ein besonders energiearm arbeitendes, insbesondere drucklos schaltendes Wechselventil bereitzustellen, insbesondere zum Umschalten des Gebrauchtwasserkanal von wasserführenden Haushaltsgeräten.

Diese Aufgabe wird gemäß den Merkmalen der unabhängigen Patentansprüche gelöst. Bevorzugte Ausführungsformen sind insbesondere den abhängigen Patentansprüchen, nachfolgender Beschreibung sowie der beigefügten Zeichnung entnehmbar.

Die Aufgabe wird gelöst durch ein Ventil ("Magnetventil"), aufweisend eine Kammer ("Steuerkammer") mit einem darin angeordneten Schwimmer, einem Wassereinlass, einem ersten Wasserauslass und einem zweiten Wasserauslass, sowie einen an der Steuerkammer angeordneten Elektromagneten, wobei der Schwimmer in einem entleerten Zustand der Steuerkammer den ersten Wasserauslass und den zweiten Wasserauslass freigibt, der Schwimmer in einem gefüllten Zustand der Steuerkammer bei deaktiviertem Elektromagneten den ersten Wasserauslass verschließt und der Schwimmer in einem gefüllten Zustand der Steuerkammer bei aktiviertem Elektromagneten den zweiten Wasserauslass verschließt. Der Schwimmer ist ferner ein magnetisierbarer bzw. magnetischer Schwimmer, und mittels des aktivierten Elektromagneten ist ein Magnetfeld in der Steuerkammer erzeugbar, das entlang zumindest eines Abschnitts seines Pfads zu dem zweiten Wasserauslass zumindest annähernd homogen ausgebildet ist.

Dieses Magnetventil weist den Vorteil auf, dass aufgrund des homogen ausgebildeten Magnetfelds eine Verschiebung des Schwimmers entlang seines Pfads zu dem zweiten Wasserauslass praktisch ohne Energieaufwand des Elektromagneten für diese Bewegung bewerkstelligt werden kann. Wenn der Schwimmer mit steigendem Flüssigkeitspegel aufschwimmt, muss also von dem Elektromagneten Energie zum Aufbau des Magnetfelds aufgewandt werden, aber nicht zur Bewegung des Schwimmers. Der Schwimmer wird folglich nicht an den Elektromagneten herangezogen, sondern nur in seinem Pfad gehalten. Die Energie zur Bewegung des Schwimmers wird vielmehr durch die steigende Flüssigkeit aufgewandt. Dadurch kann der Elektromagnet schwächer ausgelegt werden als wenn er den Schwimmer an sich heranziehen würde. Dadurch wiederum kann beispielsweise Kupfer für die Spule(n) eingespart werden.

Der Wassereinlass ist insbesondere unterhalb des ersten Wasserauslasses und des zweiten Wasserauslasses angeordnet. Insbesondere kann der Wassereinlass unterseitig der Steuerkammer angeordnet sein, und die Wasserauslässe können insbesondere oberseitig der Steuerkammer angeordnet sein.

Allgemein können mehr als zwei Schwimmer mit zugeordneten Elektromagneten und mehr als zwei Wasserauslässe vorhanden sein, ggf. in mehreren Steuerkammern. So können mehr als zwei Abzweigungen des Wasserwegs mittels des Magnetventils realisiert werden.

Es ist eine bevorzugte Weiterbildung, dass der Elektromagnet außenseitig an der Steuerkammer angeordnet ist, was eine Montage des Magnetventils erleichtert. Insbesondere falls die Steuerkammer (zumindest lokal am Pfad des Schwimmers) aus magnetisch und/oder elektrisch nicht leitendem Material besteht, z.B. einen Körper aus Kunststoff aufweist, wird dadurch zudem eine praktisch merkliche Dämpfung des magnetischen Felds am Pfad des Schwimmers vermieden.

Dass der Schwimmer in einem entleerten Zustand der Steuerkammer den ersten Wasserauslass und den zweiten Wasserauslass freigibt, kann beispielsweise dadurch umgesetzt sein, dass der Schwimmer auf einem Sitz des Wassereinlasses aufsitzt. Der Schwimmer mag dabei den Wassereinlass dichtend verschließen. Alternativ mag der Schwimmer den Wassereinlass bei Aufsitz nicht verschließen, also einen Rückstrom der Flüssigkeit durch den Wassereinlass erlauben. Ein nichtdichtender Sitz kann beispielsweise durch eine asymmetrische Gestaltung des Sitzes umgesetzt sein, beispielsweise durch Vorsehen eines Vorsprungs, welcher einen durchgängig umlaufenden Kontakt des Schwimmers mit der Steuerkammer verhindert.

Allgemein braucht der Schwimmer bei entleerter Steuerkammer jedoch nicht an dem Wassereinlass aufzusitzen, sondern mag an einem beliebigen anderen Ort aufsitzen, insbesondere an einem dafür speziell vorgesehenen Sitz auch versetzt zu dem Wassereinlass, insbesondere auf einem Boden der Steuerkammer. Falls nicht ausdrücklich anders ausgeführt, kann dieser Ort anstelle des Sitzes an dem Wassereinlass verwendet werden.

Dass der Schwimmer in einem gefüllten Zustand der Steuerkammer bei deaktiviertem Elektromagneten den ersten Wasserauslass verschließt, kann beispielsweise dadurch umgesetzt sein, dass der Schwimmer dabei auf einem Dichtsitz des ersten Wasserauslasses aufsitzt. Dass der Schwimmer in einem gefüllten Zustand der Steuerkammer bei aktiviertem Elektromagneten den zweiten Wasserauslass verschließt, kann beispielsweise dadurch umgesetzt sein, dass der Schwimmer dabei auf einem Dichtsitz des zweiten Wasserauslasses aufsitzt.

Der gefüllte Zustand der Steuerkammer kann beispielsweise durch einen Einlass von Flüssigkeit, insbesondere Wasser, durch den Wassereinlass, erreicht werden. In dem gefüllten Zustand kann die Steuerkammer vollständig mit Flüssigkeit gefüllt sein. Alternativ können luftgefüllte Taschen vorhanden sein.

Dass der Schwimmer ein magnetisierbarer Schwimmer ist, kann insbesondere bedeuten, dass der Schwimmer magnetisierbares Material (insbesondere Eisen, Nickel und/oder Kobalt) aufweist. Das magnetisierbare Material kann insbesondere ein ferromagnetisches, insbesondere weichmagnetisches, Material sein.

Der Schwimmer kann beispielsweise einen Kern aus dem magnetischen Material aufweisen. Zur Erreichung der Schwimmfähigkeit mag der Schwimmer z.B. hohl sein, beispielsweise mit einem schalenförmigen Kern.

Es ist noch eine bevorzugte Weiterbildung, dass der Schwimmer zumindest eine elastische, insbesondere weichelastische, Umhüllung aufweist. Der Schwimmer mag aber auch aus einem elastischen Material bestehen. Die elastische Ausgestaltung ermöglich einen besonders dichten Aufsitz des Schwimmers auf einem Dichtsitz.

Der Kern mag eine korrosionsbeständige Umhüllung aufweisen, z.B. aus Kunststoff.

Es ist eine bevorzugte Weiterbildung, dass der Schwimmer ein kugelförmiger Schwimmer ist. So kann ein drehlageunabhängiger Aufsitz des Schwimmers erreicht werden.

Das mittels des aktivierten Elektromagneten erzeugte homogene Magnetfeld kann entlang nur eines Abschnitts des Pfads zwischen dem Dichtsitz des Wassereinlasses und dem Dichtsitz des zweiten Wasserauslasses ausgebildet sein, oder entlang des gesamten Pfads.

Es ist eine bevorzugte Ausgestaltung, dass das Magnetfeld zumindest abschnittsweise senkrecht zu einer Bewegungsrichtung des Schwimmers ausgerichtet ist. Dadurch kann vermieden werden, Energie zur Bewegung des Schwimmers entlang seines Pfads aufzuwenden. Diese Energie wird vielmehr z.B. durch die steigende Flüssigkeit aufgewandt. Das Magnetfeld hält den Schwimmer auch in seinem Pfad, so dass der Schwimmer bei einem Ausbrechen aus dem Pfad durch das Magnetfeld auf den Pfad zurückgezogen wird. Jedoch zieht das senkrechte Magnetfeld den Schwimmer nicht entlang des Pfads. Bei dieser Ausgestaltung braucht von dem Elektromagneten eine nur vergleichsweise kleine Kraft aufgewandt zu werden, und er kann besonders klein oder schwach ausgebildet werden. Unter "zumindest abschnittsweise" kann insbesondere ein Abschnitt des Pfads des Schwimmers zwischen seinem Sitz ("Ruhesitz") im entleerten Zustand der Steuerkammer des Wassereinlasses und seinem dichtenden Sitz am zweiten Wasserauslass verstanden werden.

Es ist noch eine bevorzugte Ausgestaltung, dass das Magnetfeld zumindest abschnittsweise horizontal ausgerichtet ist. Dadurch wird eine an den Schwimmer angreifende vertikale Kraftkomponente, die durch das Magnetfeld erzeugt wird, vermieden. Eine solche Kraftkomponente würde durch die Auftriebskraft des Schwimmers auf der Flüssigkeit ausgeglichen werden und keine oder eine nur zu vernachlässigende vertikale Bewegung des Schwimmers erzeugen.

Es ist noch eine bevorzugte Ausgestaltung, dass der Pfad des Schwimmers bei aktiviertem Elektromagneten schräg verläuft, insbesondere geradlinig schräg, insbesondere ca. 45° schräg zur Vertikalen oder Horizontalen.

Es ist ferner eine bevorzugte Weiterbildung, dass das Magnetventil so ausgestaltet ist, das der Schwimmer bei einer Aktivierung des Elektromagneten bzw. auf seinem Weg zu dem zweiten Wasserauslass auf einer Laufbahn läuft. Die Laufbahn kann durch die Steuerkammer ausgebildet sein, alternativ oder zusätzlich durch einen Einsatz in der Steuerkammer. Die Form der Laufbahn kann insbesondere an die Form des Schwimmers angepasst sein und einen zumindest im Wesentlichen konstanten Spalt belassen.

Es ist eine weitere bevorzugte Ausgestaltung, dass ein Dichtsitz des ersten Wasserauslasses zumindest im Wesentlichen direkt oberhalb des Wassereinlasses angeordnet ist und ein Dichtsitz des zweiten Wasserauslasses seitlich versetzt oberhalb des Wassereinlasses angeordnet ist. Falls also der Schwimmer bei entleerter Steuerkammer insbesondere auf einem Sitz des Wassereinlasses aufsitzt, wird er bei einem Befüllen der Steuerkammer durch den steigenden Flüssigkeitspegel bei deaktiviertem Elektromagneten einfach nach oben bewegt und verschließt bei einem ausreichend hohen Flüssigkeitspegel den ersten Wasserauslass. Er braucht dazu also nicht seitlich bewegt zu werden. So kann auf einfache Weise ein Verschluss des ersten Wasserauslasses auch ohne eine Aktivierung des Elektromagneten erreicht werden. Erst bei aktiviertem Elektromagneten wird der Schwimmer mit steigendem Flüssigkeitspegel in der Steuerkammer seitlich abgelenkt, insbesondere indem er durch das Magnetfeld auf einem zumindest teilweise schräg oder horizontal verlaufenden Pfad geführt wird.

Es ist noch eine weitere bevorzugte Ausgestaltung, dass das Magnetfeld in einem Bereich des auf einem Sitz des Wassereinlasses aufsitzenden Schwimmers ausgebildet ist. Der Schwimmer wird also bereits an seinem Sitz am Wassereinlass durch das Magnetfeld zwangsgeführt. Diese Ausgestaltung bewirkt, dass der Schwimmer bei Füllung der Steuerkammer zumindest anfänglich sicher auf seinem durch das Magnetfeld vorgegebenen Pfad gehalten wird und dort eine ungeführte Bewegung verhindert wird.

Es ist noch eine bevorzugte Weiterbildung, dass der durch das Magnetfeld vorgegebene Pfad, insbesondere durchgängig, bis zu dem zweiten Wasserauslass führt, insbesondere bis zu einem zugehörigen Dichtsitz.

Es ist eine alternative bevorzugte Ausgestaltung, dass das Magnetfeld vor einem Bereich des auf dem Dichtsitz des zweiten Wasserauslasses aufsitzenden Schwimmers endet. Dadurch kann der Elektromagnet kleiner oder schwächer ausgebildet werden. Es ist ausreichend, dass der Schwimmer nach einem Verlassen des Magnetfelds durch die Steuerkammer zwangsgeführt wird und also das Magnetfeld nur dazu benötigt wird, den Schwimmer bei steigendem Flüssigkeitspegel in den Bereich der (mechanischen oder körperlichen) Zwangsführung zu bringen.

Es ist eine zugehörige bevorzugte Ausgestaltung, dass mindestens ein Vorsprung in die Steuerkammer ragt, welcher den Schwimmer im Bereich des zweiten Wasserauslasses hält, falls ein Füllstand in der Steuerkammer vorhanden ist, bei dem der Schwimmer nicht mehr durch das Magnetfeld gehalten wird. Diese Ausgestaltung ist besonders einfach umsetzbar.

De Elektromagnet weist zwei außenseitig an der Steuerkammer angeordnete Polschuhe auf.

Dies vereinfacht eine Herstellung des Magnetventils. Auch sind die Polschuhe so besonders einfach variabel ausgestaltbar, um die gewünschte Form des Magnetfelds bereitzustellen. Alternativ mögen die Polschuhe z.B. zumindest teilweise in der Steuerkammer vergossen sein.

Es ist ferner eine bevorzugte Ausgestaltung, dass die Form der Polschuhe dem Pfad des Schwimmers folgt. Dadurch kann ein geringer Abstand der Polschuhe zu dem Schwimmer und daraus ein geringer energetischer Verlust erreicht werden.

Allgemein mag auf eine Verwendung von Polschuhen ganz verzichtet werden, und der Elektromagnet also solches (insbesondere dessen Wicklungen) mag beispielsweise dem Pfad des Schwimmers folgen.

Es ist eine zur Verringerung eines Spalts zwischen den Polschuhen und dem Schwimmer bevorzugte Ausgestaltung, dass die Polschuhe eine dem Pfad des Schwimmers zugewandte Innenkontur aufweisen, welche an einen dem jeweiligen Polschuh zugewandten Bereich einer Außenkontur des Schwimmers angepasst ist. Beispielsweise mag bei kugelförmigem Schwimmer die Innenkontur eine rinnenförmige Form mit kreissektorförmigem oder bogenförmigem Querschnitt aufweisen.

Es ist außerdem eine bevorzugte Ausgestaltung, dass die Steuerkammer eine (offene) Führung aufweist (z.B. eine Führungsschiene, Führungsrinne oder Führungsrippe(n)), um eine seitliche Bewegung des Schwimmers zumindest in eine nicht zum zweiten Wasserauslass gerichtete Richtung zu begrenzen. Die Führung kann beispielsweise einstückig durch die Steuerkammer oder durch ein in die Steuerkammer eingesetztes Führungselement bereitgestellt werden. Die Führung kann insbesondere entlang seines Pfads zwischen dem Sitz des Wassereinlasses und dem Dichtsitz des ersten Wasserauslasses und/oder zwischen dem Sitz des Wassereinlasses und dem Dichtsitz des zweiten Wasserauslasses angeordnet sein.

Die Aufgabe wird auch gelöst durch ein Haushaltsgerät mit mindestens einem Magnetventil wie oben beschrieben. Das Haushaltsgerät kann insbesondere ein wasserführendes Haushaltsgerät wie ein Wäschebehandlungsgerät (Waschmaschine, Waschtrockner) oder eine Spülmaschine sein.

Es ist eine bevorzugte Ausgestaltung, dass der Wassereinlass des Magnetventils mit einem Gebrauchtwasserkanal des Haushaltsgeräts verbunden ist, der erste Wasserauslass oder der zweite Wasserauslass des Magnetventils mit einem Rückführkanal des Haushaltsgeräts verbunden ist und der zweite Wasserauslass bzw. der erste Wasserauslass des Magnetventils mit einem Ablauf des Haushaltsgeräts verbunden ist.

Die Aufgabe wird ferner gelöst durch ein Verfahren zum Betreiben eines Magnetventils, welches eine Steuerkammer mit einem darin angeordneten magnetisierbaren Schwimmer, einem Wassereinlass, einem ersten Wasserauslass und einem zweiten Wasserauslass, sowie einen außenseitig an der Steuerkammer angeordneten Elektromagneten aufweist, wobei zum Durchführen des Verfahrens Flüssigkeit durch den Wassereinlass in die Steuerkammer eingefüllt wird, und dabei der Schwimmer bei nicht aktiviertem Elektromagneten von einem Dichtsitz des Wassereinlasses aufschwimmt (insbesondere von einem Sitz des Wassereinlasses) und mit steigendem Pegel in der Steuerkammer in einen Dichtsitz des ersten Wasserauslasses gedrückt wird und der Schwimmer bei aktiviertem Elektromagneten mit steigendem Pegel in der Steuerkammer in einen Dichtsitz des zweiten Wasserauslasses gedrückt wird, wobei bei aktiviertem Elektromagneten der Schwimmer zumindest abschnittsweise mittels eines von dem Elektromagneten erzeugten homogenen Magnetfelds auf einem Pfad zu dem Dichtsitz des zweiten Wasserauslasses geführt wird.

Die Erfindung erlaubt also insbesondere eine Bereitstellung eines energiesparenden Magnetventils mit einer sehr kompakten Ventilbauform ohne Umlenkung von hydraulischen Verbindungen. Eine Schaltenergie wird nahezu komplett durch den ansteigenden Flüssigkeitspegel geliefert. Der Magnet (insbesondere Elektromagnet) fungiert nicht als Aktor, sondern als Weiche, welche die durch den steigenden Flüssigkeitspegel ausgebildete Kraft in die passende Richtung lenkt. Dadurch kann der Elektromagnet, insbesondere dessen Spulenkern, vergleichsweise klein und vor allem Kupfer sparend aufgebaut werden.

Die beschriebene Erfindung umfasst auch Bauformen und Einbaulagen, bei denen der Schwimmer (anstelle oder zusätzlich zu dem Auftrieb) durch eine Strömung von Flüssigkeit in den Dichtsitz gedrängt wird.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1: zeigt als Schnittdarstellung in Seitenansicht einen Grundaufbau eines Magnetventils mit einem magnetisierbaren Schwimmer in einem entleerten Zustand seiner Steuerkammer;
- Fig.2: zeigt das Magnetventil aus Fig.1 als Schnittdarstellung in Draufsicht;
- Fig.3: zeigt das Magnetventil aus Fig.1 in einem teilgefüllten Zustand seiner Steuerkammer bei deaktiviertem Elektromagneten;
- Fig.4: zeigt das Magnetventil aus Fig.1 in einem voll gefüllten Zustand seiner Steuerkammer bei deaktiviertem Elektromagneten;
- Fig.5: zeigt das Magnetventil aus Fig.1 in einem teilgefüllten Zustand seiner Steuerkammer bei aktiviertem Elektromagneten;
- Fig.6: zeigt das Magnetventil aus Fig.1 in einem voll gefüllten Zustand seiner Steuerkammer bei aktiviertem Elektromagneten;
- Fig.7: zeigt als Schnittdarstellung in Draufsicht einen Verlauf eines durch den Elektromagneten erzeugten Magnetfelds im Pfad des Schwimmers bei Abwesenheit des Schwimmers;
- Fig.8: zeigt als Schnittdarstellung in Draufsicht einen Verlauf eines durch den Elektromagneten erzeugten Magnetfelds im Pfad des Schwimmers bei anwesendem Schwimmer;
- Fig.9: zeigt in einer Ansicht von schräg seitlich ein Unterteil eines mehrteiligen Magnetventils;
- Fig.10: zeigt das Unterteil aus Fig.9 in einer Ansicht von schräg unten;
- Fig.11: zeigt das Unterteil aus Fig.9 in einer Ansicht von schräg oben; und
- Fig.12: zeigt als Schnittdarstellung in Seitenansicht einen Grundaufbau eines weiteren Magnetventils mit einem magnetisierbaren Schwimmer in einem entleerten Zustand seiner Steuerkammer.

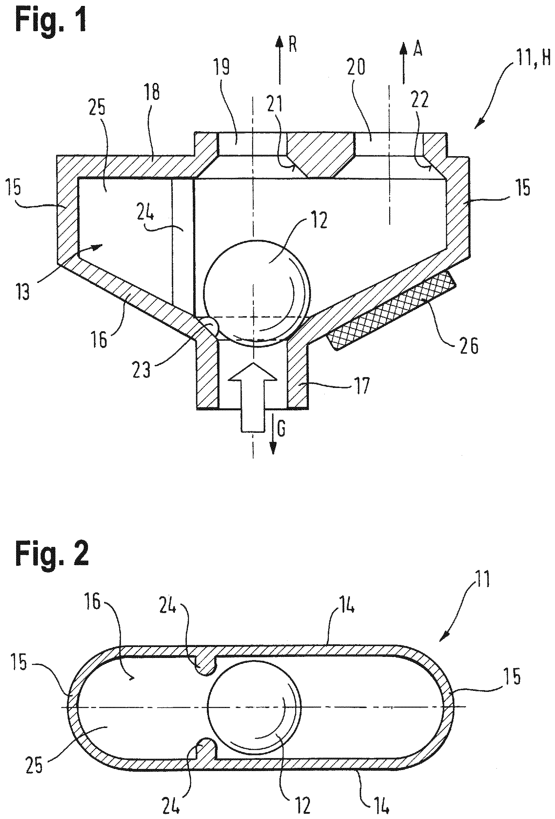

**Fig.1** zeigt als Schnittdarstellung in Seitenansicht einen Grundaufbau eines Magnetventils 11 mit einem magnetisierbaren Schwimmer 12 in einem entleerten Zustand seiner hohlen Steuerkammer 13. **Fig.2** zeigt das Magnetventil 11 als Schnittdarstellung in Draufsicht.

Die Wand der Steuerkammer 13 weist im horizontalen Querschnitt (wie in Fig.2 gezeigt) eine rechteckige Grundform mit geradlinigen Längsseiten 14 und halbkreisförmigen Querseiten 15 auf. Die Steuerkammer 13 weist an ihrem Boden 16 einen zentral angeordneten Wassereinlass 17 in Form eines Anschlussstutzens auf. Der Wassereinlass 17 dient zum Einbringen von Flüssigkeit, insbesondere Wasser W, in die Steuerkammer 13. Ausgehend von dem Wassereinlass 17 weist der Boden 16 eine sich nach oben in Richtung einer Decke 18 der Steuerkammer 13 aufweitende kegelstumpfförmige Grundform auf.

In der Decke 18 befinden sich ein erster Wasserauslass 19 und dazu seitlich versetzt ein zweiter Wasserauslass 20. Der erste Wasserauslass 19 befindet sich direkt bzw. senkrecht oberhalb des Wassereinlasses 17 während der zweite Wasserauslass 20 dazu entsprechend seitlich entlang der Längsseiten 14 versetzt ist, und zwar in der gezeigten Ansicht nach rechts. Kammerseitig weisen der erste Wasserauslass 19 und der zweite Wasserauslass 20 jeweils einen Dichtsitz 21 bzw. 22 auf.

In der Steuerkammer 13 befindet sich der Schwimmer 12 in Form einer hohlen Schwimmerkugel mit weichmagnetischem Material, z.B. NiFe. Der Schwimmer 12 sitzt oberhalb des Wassereinlasses 17 auf der Steuerkammer 13 auf, dichtet dabei aber den Wassereinlass 17 nicht ab. Vielmehr erhebt sich von dem Boden 16 ein Vorsprung 23, welcher einen umlaufenden Sitz verhindert. In dem gezeigten entleerten Zustand gibt der Schwimmer 12 den ersten Wasserauslass 19 und den zweiten Wasserauslass 20 frei.

Auf der dem zweiten Wasserauslass 20 (bezüglich der Längsseiten 14) entgegengesetzten Seite, d.h. in der gezeigten Darstellung links der Mitte, befinden sich zwei senkrecht angeordnete, in die Steuerkammer 13 ragende Führungsrippen 24. Die Führungsrippen 24 schließen seitlich so an den Dichtsitz 21 des ersten Wasserauslasses 19 an, dass der Schwimmer 12 in einer aufsteigenden Bewegung an den Führungsrippen 24 entlang zu dem ersten Wasserauslass 19 hochgleiten kann. Das durch die Führungsrippen 24 abgetrennte Teilvolumen 25 der Steuerkammer 13 sorgt für ein symmetrisches Befüllen und damit zu einem Ausschalten von Querkräften auf den aufschwimmenden Schwimmer 12. Durch die Führungsrippen 24 wird verhindert, dass der Schwimmer 12 in das Teilvolumen 25 geraten kann und das Magnetventil 11 dann in einen Zustand gelangt, bei dem im gefüllten Zustand das Wasser W sowohl aus dem ersten Wasserauslass 19 als auch aus dem zweiten Wasserauslass 20 austreten kann.

Am Boden 16 außerhalb der Steuerkammer 13 ist ein Elektromagnet 26 angeordnet, der sich von einer seitlichen Position nahe des Wassereinlasses 17 bis unterhalb des zweiten Wasserauslasses 20 erstreckt.

Das Magnetventil 11 kann insbesondere ein Bauteil eines wasserführenden Haushaltsgeräts H wie einer Waschmaschine oder eines Wäschetrockners sein. Insbesondere mag der Wassereinlass 17 mit einem Gebrauchtwasserkanal G des Haushaltsgeräts H verbunden sein, der erste Wasserauslass 19 mit einem Rückführkanal R des Haushaltsgeräts H und der zweite Wasserauslass 20 bzw. mit einem Ablauf A des Haushaltsgeräts H.

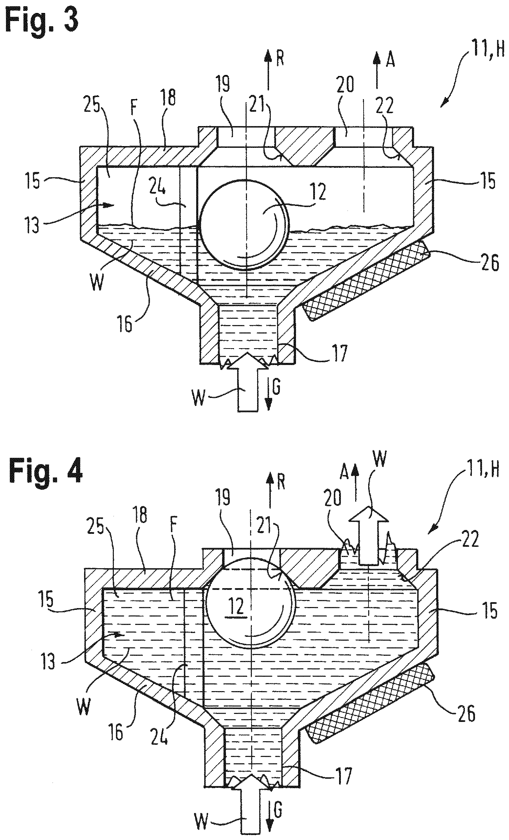

Fig.3 zeigt das Magnetventil 11 in einem teilgefüllten Zustand seiner Steuerkammer 13 bei deaktiviertem Elektromagneten 26. Die Steuerkammer 13 ist also ausgehend von dem in Fig.1 gezeigten entleerten Zustand durch eine Strömung von Wasser W durch den Wassereinlass 17 bereits teilweise bis zu einem Flüssigkeitspegel F (z.B. auch Füllstand nennbar) mit dem Wasser W gefüllt. Das Wasser W kann beispielsweise mittels einer Pumpe hochgepumpt worden sein.

Mit steigendem Flüssigkeitspegel F hebt der Schwimmer 12 von seinem Sitz ab und schwimmt auf dem Wasser W auf. Aufgrund des Ausschaltens der durch das Wasser W auf den Schwimmer 12 wirkenden Querkräfte bleibt der Schwimmer 12 praktisch oberhalb des Wassereinlasses 17 und bewegt sich zumindest nicht Wesentlich seitlich.

Wie in **Fig.4** gezeigt, wird mit noch weiter steigendem Flüssigkeitspegel F die Steuerkammer 13 vollständig gefüllt, und der Schwimmer 12 sitzt dichtend auf dem Dichtsitz 21 auf (wird dabei z.B. durch seinen Auftrieb, Staudruck und ggf. eine Flüssigkeitssäule über dem Magnetventil 11 in den Dichtsitz 21 gedrückt) und verschließt den ersten Wasserauslass 19. Folglich wird das Wasser W ausschließlich aus dem zweiten Wasserauslass 20 herausgedrückt, und gelangt so in den Ablauf A des Haushaltsgeräts H.

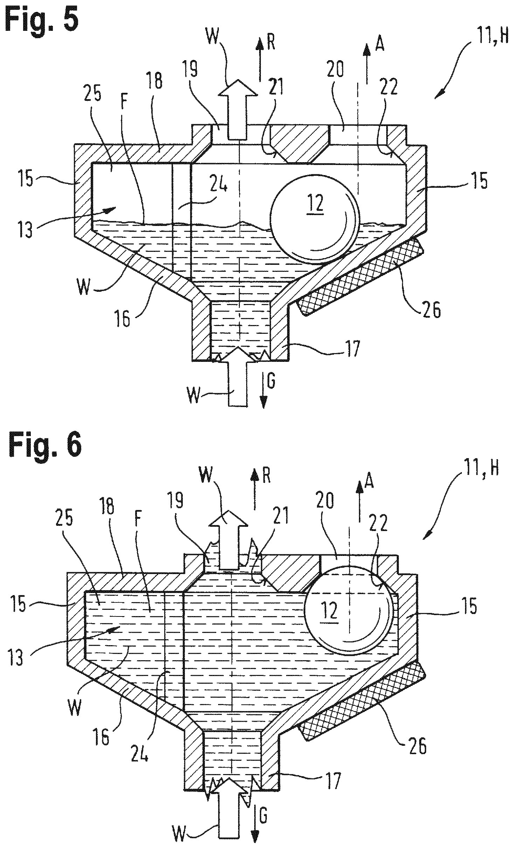

**Fig.5** zeigt das Magnetventil 11 in einem teilgefüllten Zustand seiner Steuerkammer 13 bei aktiviertem Elektromagneten 26. Mit steigendem Flüssigkeitspegel F hebt der Schwimmer 12 von seinem Sitz ab und schwimmt auf dem Wasser W auf. Aufgrund des aktivierten Elektromagneten 26 bewegt sich der Schwimmer seitlich in Richtung des zweiten Wasserauslasses 20. Dabei bildet der Boden 16 eine Laufbahn für den Schwimmer 12, und der Pfad des Schwimmers 12 entspricht einer geraden, schräg verlaufenden Linie. Bisher zieht der Elektromagnet 26 dazu den Schwimmer 12 seitlich an, was vergleichsweise viel Energie verbraucht.

Wie in **Fig.6** gezeigt, sitzt der Schwimmer 12 mit noch weiter folgendem Flüssigkeitspegel F dichtend auf dem Dichtsitz 22 auf und verschließt den zweiten Wasserauslass 20. Folglich wird das Wasser W ausschließlich aus dem ersten Wasserauslass 19 herausgedrückt, und gelangt so in den Rückführkanal R des Haushaltsgeräts H.

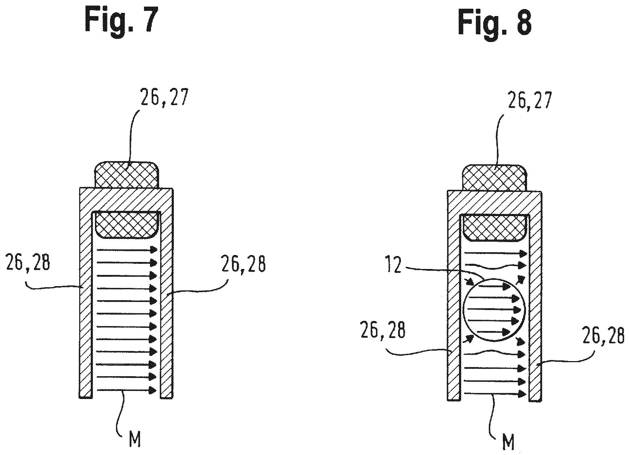

**Fig.7** zeigt als Schnittdarstellung in Draufsicht einen Verlauf eines durch den Elektromagneten 26 erzeugten Magnetfelds M im Pfad des Schwimmers 12 bei Abwesenheit des Schwimmers 12. Der Elektromagnet 26 ist hier mit einem Spulenkern 27 und Polschuhen 28 ausgebildet, wobei ein Pfad des Schwimmers 12 zwischen den Polschuhen 28 verläuft. Die Steuerkammer 13 ist nicht dargestellt.

Der Elektromagnet 26 erzeugt auf dem Pfad des Schwimmers 12 ein zumindest abschnittsweise homogen ausgebildetes Magnetfeld M. Speziell ist das Magnetfeld M entlang zumindest eines Abschnitts des Pfads senkrecht zu einer Bewegungsrichtung des Schwimmers 12 ausgerichtet, zieht diesen also nicht entlang seines Pfads. Vielmehr wird der Schwimmer 12 durch das Magnetfeld M auf seinem Pfad gehalten, und der steigende Flüssigkeitspegel F bringt die hauptsächliche Energie zur Bewegung des Schwimmers 12 auf. Das Magnetfeld M mag insbesondere horizontal ausgerichtet sein.

**Fig.8** zeigt als Schnittdarstellung in Draufsicht einen Verlauf des Magnetfelds M bei anwesendem Schwimmer 12. Durch das Einbringen des Schwimmers 12 wird das Magnetfeld M im Bereich des Schwimmers 12 inhomogen. Der inhomogene Bereich verschiebt sich mit dem Schwimmer 12.

Eine Feldenergie (d.h. eine Energie zur Ansteuerung des Elektromagneten 26) ist im Wesentlichen abhängig von einer Summe aller mit ihrer magnetischen Leitfähigkeit gewichteten Strecken, die vom dem Magnetfeld M durchsetzt werden, hier insbesondere Luftstrecken und Strecken in dem Schwimmer 12. Über die Bewegung des Schwimmers entlang seines Pfads bleibt deren Abstand zu dem Elektromagneten (insbesondere zu seinen Polschuhen 28) bevorzugterweise konstant. Eine Größe der gewichteten Summe ändert sich bei Bewegung des Schwimmers 12 nicht. Die Feldenergie ändert sich folglich nicht und der Schwimmer 12 lässt sich kraftlos längs seines Pfads bzw. des Elektromagneten (insbesondere dessen Polschuhen 28) verschieben.

Bevorzugterweise liegt der Schwimmer 12 liegt bereits zu Beginn der Aktivierung des Elektromagneten 26 in dem Magnetfeld M.

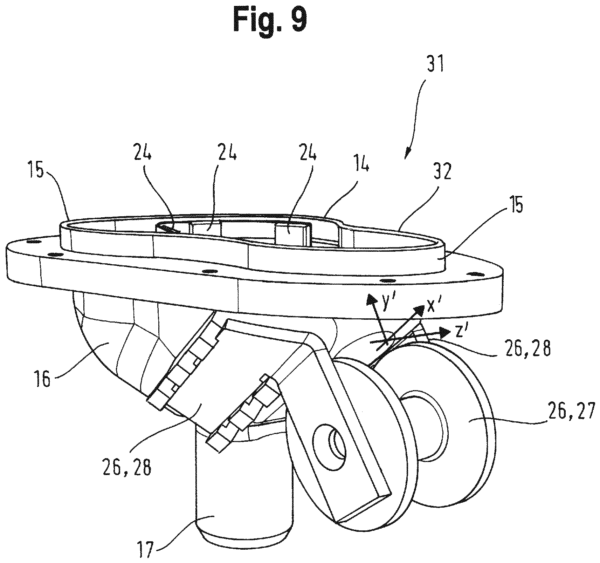

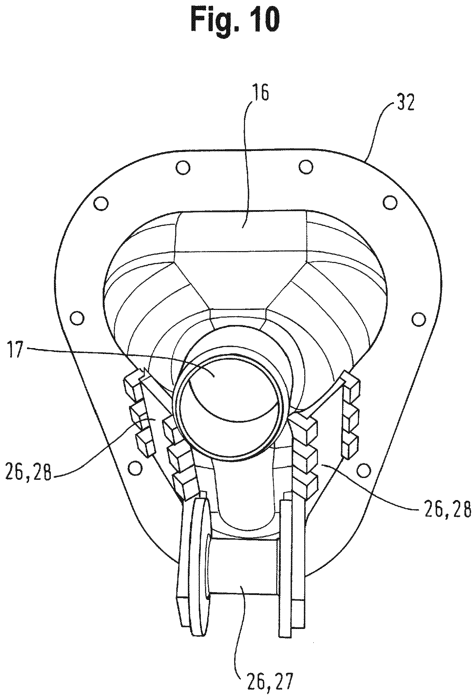

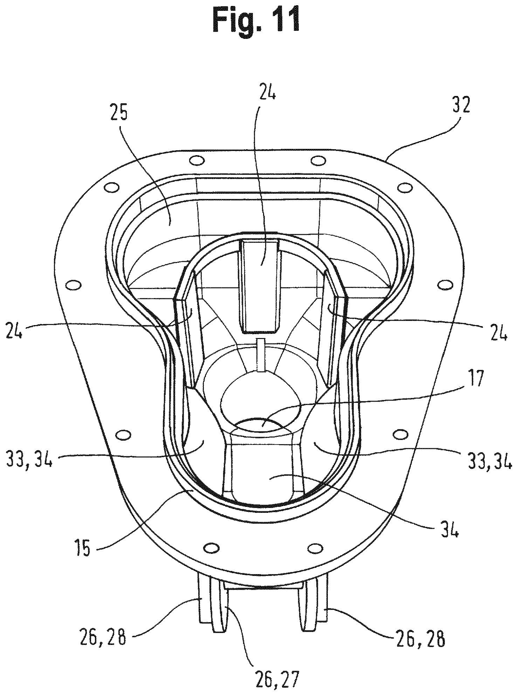

**Fig.9** zeigt in einer Ansicht von schräg seitlich ein Unterteil 32 eines mehrteiligen Magnetventils 31. **Fig.10** zeigt das Unterteil 32 in einer Ansicht von schräg unten. **Fig.11** zeigt das Unterteil 32 in einer Ansicht von schräg oben.

Das Unterteil 32 umfasst den Wassereinlass 17 und den Elektromagneten 26, jedoch weder den ersten Wasserauslass 19 noch den zweiten Wasserauslass 20. Die zwei Polschuhe 28 sind so geformt, dass sie dem Pfad des Schwimmers 12 folgen. Die Polschuhe 28 weisen insbesondere eine dem Pfad des Schwimmers 12 zugewandte Innenkontur auf, welche an eine Außenkontur des Schwimmers 12 angepasst ist, hier z.B. rinnenförmig. Die Polschuhe 28 sind hier als Bleche ausgebildet, die mit einem Spulenkern 27 des Elektromagneten verbunden sind. Die Polschuhe 28 schmiegen sich unter etwa 45° zur Vertikalen außenseitig an die Steuerkammer 13 (bzw. an deren Gehäuse) an.

An den sich innen an der Steuerkammer 13 (bzw. deren) Gehäuse ergebenden seitlichen Facetten 33 (welche zumindest einen Teil der Laufbahn 34 des Schwimmers 12 definieren) liegt der Schwimmer 12 an, so dass ein Luftspalt zwischen den Polschuhen 28 und dem Schwimmer 12 minimiert ist. Es ergibt sich ein magnetischer Kreis, der aus dem Spulenkern 27, den Polschuhen 28, den beiden Luftspalten mit einer Gehäusewand der Steuerkammer 13 sowie dem Schwimmer 12 besteht.

Die durch den Schwimmer 12 bedingte Inhomogenität des Magnetfelds erzeugt eine anziehende Kraft zwischen dem Schwimmer 12 und den Polschuhen 28. Eine Zerlegung des Kraftvektors (der Kraft zwischen den Polschuhen 28 und Schwimmer 12) in drei senkrecht aufeinander stehende Komponenten (wie durch das in Fig.9 gezeigte Koordinatensystem angedeutet) ergibt, dass aus Symmetriegründen die Kraftkomponente in einer horizontalen z'-Richtung vernachlässigbar oder sogar Null ist. Die Komponente y' orthogonal zur beabsichtigten Bewegungsrichtung des Schwimmers 12 (d.h. orthogonal zur schrägen Flanke des Bodens 16) liefert eine Anziehungskraft, der Schwimmer 12 kann aber keine Bewegung in dieser Richtung ausführen. Die dritte Kraftkomponente in x'-Richtung verläuft entlang der Bewegungsrichtung des Schwimmers 12 und damit der Schräge, wobei aus der Verschiebungssymmetrie des Magnetfelds zusammen mit der durch den Schwimmer 12 bedingten Inhomogenität eine vernachlässigbar kleine oder sogar nicht vorhandene Kraftkomponente folgt. In allen Basisrichtungen sind daher entweder die Kraft oder der Weg Null, damit ergibt sich kein mechanischer Energieeintrag (entsprechend Kraft mal Weg) von dem Elektromagneten 26 in den Schwimmer 12. Bei einem langsamen Anstieg des Wassers W in der Steuerkammer 13 kann man in guter Näherung entlang des Pfads des Schwimmers 12 gleichbleibende Kraftverhältnisse annehmen, d.h. dass während des gesamten Hochsteigens des Schwimmers 12 von dem Elektromagneten keine mechanische Energie geleistet zu werden braucht.

Zum Aufbau des Magnetfelds M als solchem muss allerdings Energie investiert werden. Dieses Magnetfeld M verläuft durch den Spulenkern 27, die beiden Polschuhe 28 und über die Luftspalte bzw. Gehäusewandungen der Steuerkammer 13 an den Berührstellen des Schwimmers 12 mit dem Gehäuse der Steuerkammer 13. Diese Energie ist annähernd unabhängig von der Position des Schwimmers 12.

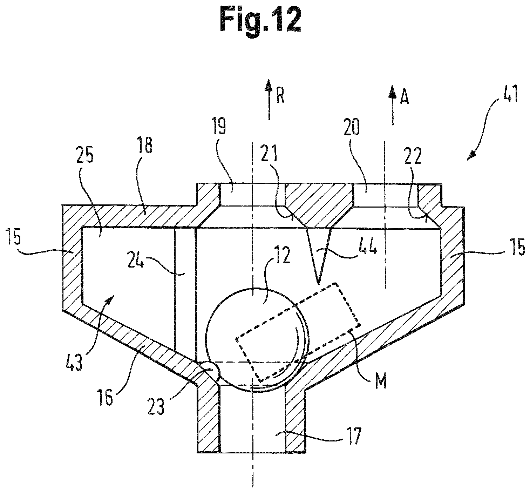

**Fig.12** zeigt als Schnittdarstellung in Seitenansicht einen Grundaufbau eines weiteren Magnetventils 41 mit einem magnetisierbaren Schwimmer 12 in einem entleerten Zustand seiner Steuerkammer 43.

Das homogene Magnetfeld M, dessen Bereich hier gepunktet eingezeichnet ist, endet vor einem Bereich des auf dem Dichtsitz 22 des zweiten Wasserauslasses 20 aufsitzenden Schwimmers 12. Die magnetische Führung des Schwimmers 12 erstreckt sich also über einen kürzeren Bereich des gesamten Pfads zu dem zweiten Wasserauslass 20. Insbesondere wenn ein Mittelpunkt des Schwimmers 12 die Mittelebene zwischen den beiden Wasserauslässen 19 und 20 überschritten hat, kann eine mechanische Führung, z.B. durch mindestens einen senkrechten Vorsprung oder Steg 44, die weitere Führung des Schwimmers 12 übernehmen. Dazu ragt hier der Steg 44 von der Decke in die Steuerkammer 13, welcher den Schwimmer 12 im Bereich des zweiten Wasserauslasses 20 hält, falls ein Flüssigkeitspegel F in der Steuerkammer 13 anliegt, bei dem der Schwimmer 12 nicht mehr durch das Magnetfeld M gehalten wird.

Selbstverständlich ist die vorliegende Erfindung nicht auf das gezeigte Ausführungsbeispiel beschränkt.

So mag der Schwimmer z.B. auch zylinderförmig ausgestaltet sein.

### Bezugszeichenliste

- 11: Magnetventil
- 12: Schwimmer
- 13: Steuerkammer
- 14: geradlinige Längsseite
- 15: halbkreisförmige Querseite
- 16: Boden
- 17: Wassereinlass
- 18: Decke
- 19: erster Wasserauslass
- 20: zweiter Wasserauslass
- 21: Dichtsitz
- 22: Dichtsitz
- 23: Vorsprung
- 24: Führungsrippe
- 25: Teilvolumen
- 26: Elektromagnet
- 27: Spulenkern
- 28: Polschuh
- 31: Magnetventil
- 32: Unterteil des Magnetventils
- 33: Facette
- 34: Laufbahn
- 41: Magnetventil
- 43: Steuerkammer
- 44: Steg
- A: Ablauf
- F: Flüssigkeitspegel
- G: Gebrauchtwasserkanal
- H: Hausgerät
- M: Magnetfeld
- R: Rückführkanal
- W: Wasser

## Patentansprüche

1. Magnetventil (11; 31; 41), aufweisend
- eine Steuerkammer (13; 43) mit einem darin angeordneten Schwimmer (12), einem Wassereinlass (17), einem ersten Wasserauslass (19) und einem zweiten Wasserauslass (20), sowie
- einen an der Steuerkammer (13; 43) angeordneten Elektromagneten (26),
wobei
- der Schwimmer (12) in einem entleerten Zustand der Steuerkammer (13; 43) den ersten Wasserauslass (19) und den zweiten Wasserauslass (20) freigibt,
- der Schwimmer (12) in einem gefüllten Zustand der Steuerkammer (13; 43) bei deaktiviertem Elektromagneten (26) den ersten Wasserauslass (19) verschließt und
- der Schwimmer (12) in einem gefüllten Zustand der Steuerkammer (13; 43) bei aktiviertem Elektromagneten (26) den zweiten Wasserauslass (20) verschließt,
wobei
- der Schwimmer (12) ein magnetisierbarer Schwimmer (12) ist und
- mittels des aktivierten Elektromagneten (26) ein Magnetfeld (M) in der Steuerkammer (13; 43) erzeugbar ist, das entlang zumindest eines Abschnitts eines Pfads des Schwimmers (12) zumindest annähernd homogen ausgebildet ist, **dadurch gekennzeichnet, dass** der Elektromagnet (26) zwei außenseitig an der Steuerkammer (13; 43) angeordnete Polschuhe (28) aufweist, deren Form dem Pfad des Schwimmers (12) folgt.

2. Magnetventil (11; 31; 41) nach Anspruch 1, wobei das Magnetfeld (M) entlang zumindest eines Abschnitts des Pfads des Schwimmers (12) zumindest abschnittsweise senkrecht zu einer Bewegungsrichtung des Schwimmers (12) ausgerichtet ist.

3. Magnetventil (11; 31; 41) nach einem der vorhergehenden Ansprüche, wobei das Magnetfeld (M) zumindest abschnittsweise horizontal ausgerichtet ist.

4. Magnetventil (11; 31; 41) nach einem der vorhergehenden Ansprüche, wobei ein Dichtsitz (21) des ersten Wasserauslasses (19) zumindest im Wesentlichen direkt oberhalb des Wassereinlasses (17) angeordnet ist und ein Dichtsitz (22) des zweiten Wasserauslasses (20) seitlich versetzt oberhalb des Wassereinlasses (17) angeordnet ist.

5. Magnetventil (11; 31; 41) nach einem der vorhergehenden Ansprüche, wobei das Magnetfeld (M) in einem Bereich des auf einem Sitz des Wassereinlasses (17) aufsitzenden Schwimmers (12) ausgebildet ist.

6. Magnetventil (11; 31; 41) nach einem der vorhergehenden Ansprüche, wobei
- das Magnetfeld (M) vor einem Bereich des auf dem Dichtsitz (22) des den zweiten Wasserauslass (20) aufsitzenden Schwimmers (12) endet und
- mindestens ein Vorsprung (44) in die Steuerkammer (13; 43) ragt, welcher den Schwimmer (12) im Bereich des zweiten Wasserauslasses (20) hält, falls ein Füllstand (F) in der Steuerkammer (13; 43) vorhanden ist, bei dem der Schwimmer (12) nicht mehr durch das Magnetfeld (M) gehalten wird.

7. Magnetventil (11; 31; 41) nach einem der vorhergehenden Ansprüche, wobei die Polschuhe (28) eine dem Pfad des Schwimmers (12) zugewandte Innenkontur aufweisen, welche an eine Außenkontur des Schwimmers (12) angepasst ist.

8. Magnetventil (11; 31; 41) nach einem der vorhergehenden Ansprüche, wobei die Steuerkammer (13; 43) eine Führung (24) aufweist.

9. Haushaltsgerät (H) mit mindestens einen Magnetventil (11; 31; 41) nach einem der vorhergehenden Ansprüche.

10. Haushaltsgerät (H) nach Anspruch 9, wobei
- der Wassereinlass (17) des Magnetventils (11; 31; 41) mit einem Gebrauchtwasserkanal des Haushaltsgeräts (H) verbunden ist,
- der erste Wasserauslass (19) oder der zweite Wasserauslass (20) des Magnetventils (11; 31; 41) mit einem Rückführkanal des Haushaltsgeräts (H) verbunden ist und
- der zweite Wasserauslass (20) bzw. der erste Wasserauslass (19) des Magnetventils (11; 31; 41) mit einem Ablauf (A) des Haushaltsgeräts (H) verbunden ist.

11. Verfahren zum Betreiben eines Magnetventils (11; 31; 41), welches eine Steuerkammer (13; 43) mit einem darin angeordneten magnetisierbaren Schwimmer (12), einem Wassereinlass (17), einem ersten Wasserauslass (19) und einem zweiten Wasserauslass (20), sowie einen außenseitig an der Steuerkammer (13; 43) angeordneten Elektromagneten (26) aufweist und zum Durchführen des Verfahrens Flüssigkeit durch den Wassereinlass (17) in die Steuerkammer (13; 43) eingefüllt wird, und dabei
- der Schwimmer (12) bei nicht aktiviertem Elektromagneten (26) aufschwimmt und mit steigendem Pegel (F) in der Steuerkammer (13; 43) in einen Dichtsitz (21) des ersten Wasserauslasses (19) gedrückt wird und
- der Schwimmer (12) bei aktiviertem Elektromagneten (26) aufschwimmt und mit steigendem Pegel (F) in der Steuerkammer (13; 43) in einen Dichtsitz (22) des zweiten Wasserauslasses (20) gedrückt wird,
**dadurch gekennzeichnet, dass** bei aktiviertem Elektromagneten (26) der Schwimmer (12) zumindest abschnittsweise mittels eines von dem Elektromagneten (26) erzeugten homogenen Magnetfelds (M) auf einem Pfad zu dem Dichtsitz (22) des zweiten Wasserauslasses (20) geführt wird.

## Claims

1. Solenoid valve (11; 31; 41) having
- a control chamber (13; 43) with a float (12) arranged therein, a water inlet (17), a first water outlet (19) and a second water outlet (20), and
- an electromagnet (26) arranged on the control chamber (13; 43),
wherein
- when the control chamber (13; 43) is empty, the float (12) releases the first water outlet (19) and the second water outlet (20),
- when the control chamber (13; 43) is filled, the float (12) closes the first water outlet (19) when the electromagnet is deactivated (26) and
- when the control chamber (13; 43) is filled, the float (12) closes the second water outlet (20) when the electromagnet (26) is activated,
wherein
- the float (12) is a magnetisable float (12) and
- a magnetic field (M) is able to be generated in the control chamber (13; 43) by means of the activated electromagnet (26), said magnetic field being designed to be at least approximately homogenous along at least one portion of a path of the float (12),
**characterised in that** the electromagnet (26) comprises two pole shoes (28) arranged on the outer face of the control chamber (13; 43), the shape thereof following the path of the float (12).

2. Solenoid valve (11; 31; 41) according to claim 1, wherein the magnetic field (M) is oriented along at least one portion of the path of the float (12) at least partially perpendicular to a direction of movement of the float (12).

3. Solenoid valve (11; 31; 41) according to one of the preceding claims, wherein the magnetic field (M) is oriented at least partially horizontally.

4. Solenoid valve (11; 31; 41) according to one of the preceding claims, wherein a sealing seat (21) of the first water outlet (19) is arranged at least substantially directly above the water inlet (17) and a sealing seat (22) of the second water outlet (20) is arranged laterally offset above the water inlet (17).

5. Solenoid valve (11; 31; 41) according to one of the preceding claims, wherein the magnetic field (M) is formed in a region of the float (12) located on a seat of the water inlet (17).

6. Solenoid valve (11; 31; 41) according to one of the preceding claims, wherein
- the magnetic field (M) terminates before a region of the float (12) located on the sealing seat (22) of the second water outlet (20) and
- at least one projection (44) protrudes into the control chamber (13; 43), said projection holding the float (12) in the region of the second water outlet (20), if a filled state (F) is present in the control chamber (13; 43) at which the float (12) is no longer held by the magnetic field (M).

7. Solenoid valve (11; 31; 41) according to one of the preceding claims, wherein the pole shoes (28) have an internal contour facing the path of the float (12), said internal contour being adapted to an outer contour of the float (12).

8. Solenoid valve (11; 31; 41) according to one of the preceding claims, wherein the control chamber (13; 43) has a guide (24).

9. Domestic appliance (H) having at least one solenoid valve (11; 31; 41) according to one of the preceding claims.

10. Domestic appliance (H) according to claim 9, wherein
- the water inlet (17) of the solenoid valve (11; 31; 41) is connected to a waste water channel of the domestic appliance (H),
- the first water outlet (19) or the second water outlet (20) of the solenoid valve (11; 31; 41) is connected to a return channel of the domestic appliance (H) and
- the second water outlet (20) and/or the first water outlet (19) of the solenoid valve (11; 31; 41) is connected to a drain (A) of the domestic appliance (H).

11. Method for operating a solenoid valve (11; 31; 41) which has a control chamber (13; 43) with a magnetisable float (12) arranged therein, a water inlet (17), a first water outlet (19) and a second water outlet (20), and an electromagnet (26) arranged on the outer face of the control chamber (13; 43) and for carrying out the method liquid is filled into the control chamber (13; 43) through the water inlet (17), and in this case
- when the electromagnet (26) is not activated the float (12) floats up and when the level (F) rises in the control chamber (13; 43) the float is forced into a sealing seat (21) of the first water outlet (19) and
- when the electromagnet (26) is activated the float (12) floats up and when the level (F) rises in the control chamber (13; 43) the float is forced into a sealing seat (22) of the second water outlet (20),
- **characterised in that** when the electromagnet (26) is activated the float (12) is at least partially guided by means of a homogenous magnetic field (M) produced by the electromagnet (26) on a path to the sealing seat (22) of the second water outlet (20).

## Revendications

1. Électrovanne (11 ; 31 ; 41), comportant
- une chambre de commande (13 ; 43) dans laquelle est placé un flotteur (12), une entrée d'eau (17), une première sortie d'eau (19) et une deuxième sortie d'eau (20), ainsi que
- un électroaimant (26) placé sur la chambre de commande (13 ; 43),
où
- le flotteur (12) libère la première sortie d'eau (19) et la deuxième sortie d'eau (20) lorsque la chambre de commande (13 ; 43) est vide,
- le flotteur (12) ferme la première sortie d'eau (19) lorsque la chambre de commande (13 ; 43) est remplie et l'électroaimant (26) est désactivé et
- le flotteur (12) ferme la deuxième sortie d'eau (20) lorsque la chambre de commande (13 ; 43) est remplie et l'électroaimant (26) est activé,
où
- le flotteur (12) est un flotteur (12) magnétisable et
- l'électroaimant (26) activé permet de produire dans la chambre de commande (13 ; 43) un champ magnétique (M) qui est au moins à peu près homogène le long d'au moins une partie du chemin du flotteur (12),
**caractérisée en ce que** l'électroaimant (26) comporte deux pièces polaires (28) placées sur le côté extérieur de la chambre de commande (13 ; 43) et dont la forme suit le chemin du flotteur (12).

2. Électrovanne (11 ; 31 ; 41) selon la revendication 1, le champ magnétique (M) le long d'au moins une partie du chemin du flotteur (12) étant orienté au moins en partie perpendiculairement à un sens de déplacement du flotteur (12).

3. Électrovanne (11 ; 31 ; 41) selon l'une des revendications précédentes, le champ magnétique (M) étant orienté au moins en partie horizontalement.

4. Électrovanne (11 ; 31 ; 41) selon l'une des revendications précédentes, un siège d'étanchéité (21) de la première sortie d'eau (19) étant placé au moins pour l'essentiel juste au-dessus de l'entrée d'eau (17) et un siège d'étanchéité (22) de la deuxième sortie d'eau (20) étant placé en déport latéral au-dessus de l'entrée d'eau (17).

5. Électrovanne (11 ; 31 ; 41) selon l'une des revendications précédentes, le champ magnétique (M) étant formé dans une région du flotteur (12) reposant sur un siège de l'entrée d'eau (17).

6. Électrovanne (11 ; 31 ; 41) selon l'une des revendications précédentes,
- le champ magnétique (M) se terminant avant une région du flotteur (12) reposant sur le siège d'étanchéité (22) de la deuxième entrée d'eau (20) et
- au moins une saillie (44) venant pénétrer dans la chambre de commande (13 ; 43), laquelle saillie (44) retient le flotteur (12) dans la région de la deuxième sortie d'eau (20) s'il existe dans la chambre de commande (13 ; 43) un niveau de remplissage (F) en présence duquel le flotteur (12) n'est plus retenu par le champ magnétique (M).

7. Électrovanne (11 ; 31 ; 41) selon l'une des revendications précédentes, les pièces polaires (28) ayant un contour intérieur tourné vers le chemin du flotteur (12) et adapté à un contour extérieur du flotteur (12).

8. Électrovanne (11 ; 31 ; 41) selon l'une des revendications précédentes, la chambre de commande (13 ; 43) comportant un guide (24).

9. Appareil ménager (H) doté d'au moins une électrovanne (11 ; 31 ; 41) selon l'une des revendications précédentes.

10. Appareil ménager (H) selon la revendication 9,
- l'entrée d'eau (17) de l'électrovanne (11 ; 31 ; 41) étant reliée à une conduite d'eaux usées de l'appareil ménager (H),
- la première sortie d'eau (19) ou la deuxième sortie d'eau (20) de l'électrovanne (11 ; 31 ; 41) étant reliée à une conduite de retour de l'appareil ménager (H) et
- la deuxième sortie d'eau (20) resp. la première sortie d'eau (19) de l'électrovanne (11 ; 31 ; 41) étant reliée à une évacuation (A) de l'appareil ménager (H).

11. Procédé pour faire fonctionner une électrovanne (11 ; 31 ; 41) laquelle comporte une chambre de commande (13 ; 43) dans laquelle est placé un flotteur (12) magnétisable, une entrée d'eau (17), une première sortie d'eau (19) et une deuxième sortie d'eau (20), ainsi qu'un électroaimant (26) placé sur le côté extérieur de la chambre de commande (13 ; 43), où pour mettre en oeuvre le procédé un liquide est introduit dans la chambre de commande (13 ; 43) à travers l'entrée d'eau (17), et où
- le flotteur (12) flotte à la surface lorsque l'électroaimant (26) n'est pas activé, et est poussé dans un siège d'étanchéité (21) de la première sortie d'eau (19) à mesure que le niveau (F) monte dans la chambre de commande (13 ; 43), et
- le flotteur (12) flotte à la surface lorsque l'électroaimant (26) est activé, et est poussé dans un siège d'étanchéité (22) de la deuxième sortie d'eau (19) à mesure que le niveau (F) monte dans la chambre de commande (13 ; 43),
**caractérisé en ce que**
lorsque l'électroaimant (26) est activé, le flotteur (12) est guidé au moins en partie sur un chemin vers le siège d'étanchéité (22) de la deuxième sortie d'eau (20), au moyen d'un champ magnétique (M) homogène produit par l'électroaimant (26).
